# EUROPEAN PATENT APPLICATION

(11) **EP 1 146 454 A2**
(43) Date of publication of application: **17.10.2001**
(21) Application number: 01107557.9
(22) Date of filing: 27.03.2001
(51) Int. Cl.: G06F 17/60

(54) **Network system, method of processing advertising information in a network system, and data storage medium carrying a program to implement the method**

(30) Priority: 27.03.2000 JP 2000087280
(71) Applicant: SEIKO EPSON CORPORATION, Tokyo 160-0811 (JP)
(72) Inventor: Minowa, Masahiro, Suwa-shi, Nagano-ken 392-8502 (JP)
(74) Representative: Hoffmann, Eckart, Dipl.-Ing.

(57) **Abstract**

To provide an advertising placement processing method and system enabling the information placement application process to be accomplished over the Internet (10), the system being a system for placing various information, including advertisements, introductions, event announcements, help wanted ads, looking to buy notices, announcements, and requests for assistance, on receipts issued from a POS terminal, vouchers issued by a kiosk terminal, and queuing number tickets issued from queuing number issuing devices in banks, for example. Information relating to the advertising application, advertising information, and advertising fee payment information is sent from a client PC (5) via the Internet (10) to a server system (1); the server system (1) calculates fee information according to the received advertising information, and sends it via the Internet (10) to the client PC (5). After confirming completion of the payment process, the server system (1) sends the advertising information to a central system, and the central system distributes the received advertising information to the plural POS systems (3, 7) connected to the central system. A store POS system that receives the advertising information prints the advertising information together with the transaction information for the purchased products on the receipt issued during the customer purchase transaction process.

## Description

The present invention relates to a network system and a method for processing advertising information. More particularly, the invention relates to such network system and method using the Internet for accepting and distributing certain information called "advertising placement information" in this text, such as private and commercial advertisements, introductions, event announcements, and other types of information to be placed on, for example, a receipt or customer service number ticket issued by a so-called POS (Point-Of-Sale or Point-Of-Service) terminal such as a cash register in a store, a check-out counter terminal in a super market, or a queuing number issuing device in a bank, securities company, hospital, etc.

POS systems that can also be used to put advertising information directly into the hands of customers are already used in convenience stores, grocery stores, and other retail businesses. One known POS system provides advertising by printing receipt information to receipt paper having advertising information preprinted to the front or back of the paper. EP-A-1 035 527 (prior art according to Art. 54(3) EPC) proposes a POS system that prints advertisements and other information entered at a data entry terminal located in the store on receipts as added-value information. The former type of POS system is suitable only for providing a fixed, constant advertising content for a relatively long period of time. The latter type of POS system makes it possible to directly provide individual local residents with advertisement including information about local events. As lifestyle changes, such systems could in the near future become an extremely effective advertising medium.

For an advertiser to place an advertisement using the latter type of POS system, the advertiser must visit the store where the data input terminal is located in order to apply for placing an advertisement using the data input terminal. The application process is therefore cumbersome. In addition, the desired advertising placement information must be input during the application process, and the information that can be placed in the advertisement could be limited depending upon the capabilities of the data input terminal. It may not be possible to enter image data, for example, if the data entry terminal can only handle text. Furthermore, both money and space are needed to install the data input terminal for accepting advertisement applications. The data input terminals are desirably located in as many stores as possible if the convenience of the advertiser is considered, and the associated cost and space requirements are thus a significant burden for the system provider.

It is an object of the present invention to provide a system and method that enable advertisement applications performed by way of the now widely available Internet, wherein the advertisements are still printed by way of POS terminal devices. The POS terminal devices are typically located in retail chain branches (including individual stores) or stores subscribing to advertising information distribution services, and the advertising applicant (advertiser) can select the store or stores for placing the advertisement.

It should be noted that as used in this specification a "branch" includes branches of banks, securities companies, and other organizations, branches of a supermarket, department store, or other type of store, and affiliated stores, such as convenience stores, interconnected by a specific contract (referred to as convenience stores below). Furthermore, a "POS terminal device" as used in this specification means a "Point-Of-Service" terminal device in a broad sense and includes not only cash registers connected to a POS system used in a store, but also other types of devices for issuing printed matter such as tickets and queuing numbers, and transaction statements issued by automated teller machines (ATMs).

The object is achieved with a network system as claimed in claim 1 and a method as claimed in claim 16. Preferred embodiments of the invention are subject-matter of the dependent claims.

In accordance with the present invention it is possible for an undetermined number of people to freely apply for placing and advertisement via the Internet. By using a system or method according to the present invention, an advertisement application can be accomplished very quickly and easily. Furthermore, distributing advertisement application information to various store networks already in place can be efficiently accomplished with the present invention, and such information is also easy. Moreover, it is also possible to specify a particular advertisement distribution area at the level of individual stores.This makes the placement of advertisements extremely effective because the advertising applicant can select only the necessary one or more stores or shops from the multiple stores or shops having POS systems that are connected to the network. Furthermore, the necessary data can be distributed immediately to any area as long as it is connected to the network, and it is therefore possible to specify the advertisement distribution area quickly and extremely easily and advertisements can be placed in the selected places or areas.

Furthermore, it is possible to provide and place advertisements to meet a wide range of user needs, from advertising for an extremely short period of time to pinpoint advertising.

Preferably, the advertisement application allows specifying an advertising target, i.e., the group of people to whom the advertisement is to be presented. This enables effective advertising by the advertiser, and at the same time enables the service provider to efficiently use advertising space.

Yet further preferably, the means (d) for distribution to the POS system is characterized by distribution via a central computer. A plurality of POS systems are generally managed en masse by a POS server system, i.e., the central computer. It can therefore be more efficient to distribute specific data from the POS server system to the necessary POS systems.

A program for implementing the method according to the present invention can be stored in machine-readable form on various types of data storage medium such as a Compact Disc (CD), a floppy disk, a hard disk, a magneto-optical disk, a Digital Video Disk (DVD), a magnetic tape and a semiconductor memory. In addition, such program can be loaded into a server computer for the World Wide Web (WWW) so that users can download the program from the server and save the program.

Other objects and attainments together with a fuller understanding of the invention will become apparent and appreciated by referring to the following description and claims taken in conjunction with the accompanying drawings, in which:
- Fig. 1: shows a first example of a network system according to the present invention;
- Fig. 2: shows an example of the basic configuration of an ADS system 1 in Fig. 1;
- Fig. 3: shows the appearance of a client PC 5;
- Fig. 4: is a function block diagram of client PC 5;
- Fig. 5: shows an example of the configuration of POS system 3;
- Fig. 6: shows a convenience store POS terminal 51 as an example of a POS terminal device 50;
- Fig. 7: is a block diagram showing the basic configuration of POS terminal 51 in greater detail;
- Fig. 8: shows a queuing number issuing device 65 as another example of a POS terminal device 50;
- Fig. 9: is a flow chart of the advertising placement application process involving the client PC 5 and ADS system;
- Fig. 10: shows an example of an application page 13;
- Fig. 11: shows an example of a payment specification form of a transaction processing page 14;
- Fig. 12: is a flow chart of a process for distributing advertisement application information from ADS system 1 through central computer 2 to POS system 3;
- Fig. 13: is a flow chart of a process whereby accounting information is entered and printed together with advertising placement information on a receipt in a POS system 3 using POS terminal 51 shown in Fig. 6 as POS terminal device 50;
- Fig. 14: is a flow chart of process steps replacing steps S400 and S401 on the POS terminal 51 side in Fig. 13;
- Fig. 15: shows an exemplary display of an advertisement selection list presented on an information selection device;
- Fig. 16: shows an exemplary receipt having an advertisement printed below the transaction data;
- Fig. 17: shows an exemplary receipt having plural blocks of advertisement printed below the transaction information with the advertisements reduced in scale for printing;
- Fig. 18: shows another example in which the advertisement is printed above the transaction information;
- Fig. 19: shows an exemplary queuing number ticket having an advertisement printed below the queuing number; and
- Fig. 20: shows another example of an application page for entering advertising management information.

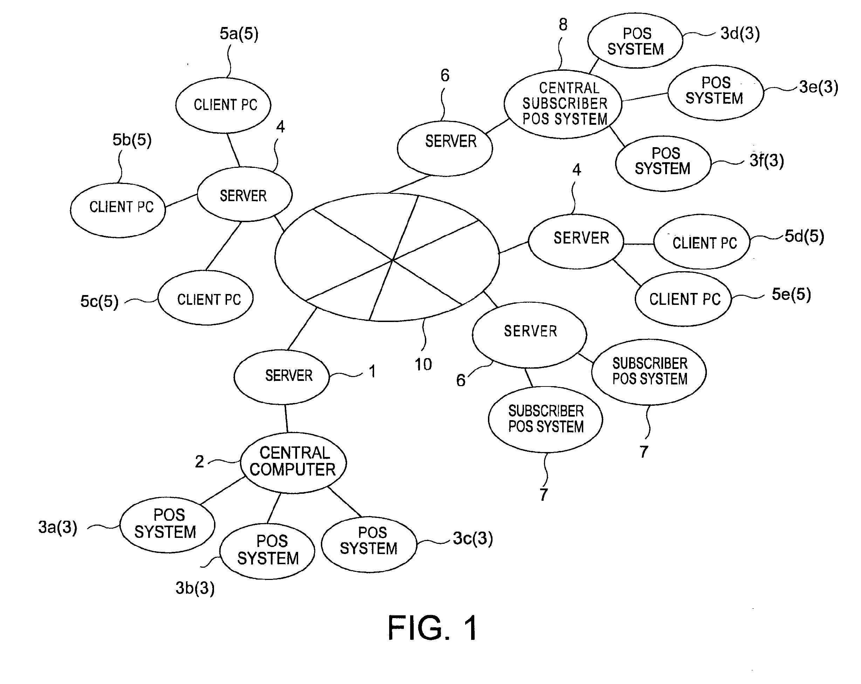

Fig. 1 shows a first embodiment of a network system according to the present invention. In this figure reference numeral 1 denotes an application/distribution server (ADS) system for receiving and managing advertisement application information including distributing all or part of the received information. Reference numeral 2 denotes a central computer forming a central system for a POS management system (referred to below as a POS system) connected to it. Each POS system located in a convenience store, for example, includes one or more POS terminal devices and provides central management of data collected from the one or more POS terminals. It should be noted that the term POS system is often used as including the central computer 2, i.e., both the store-side systems and the central computer 2 as a central system. In this specification, however, the term "POS system" is used to mean only a store-side system separate from the central system. It should be further noted that in addition to POS systems such as those used in convenience stores, department stores, supermarkets, and shopping malls, the term as used in this text also includes various types of systems for issuing particular printed matter to customers, including queuing number issuing systems as they are used in banks and securities companies, for example; nowadays such systems are also called POS system with POS then standing for "Point-Of-Service".

Although five individual POS systems 3a to 3e located in stores are shown, reference numeral 3 will be used to refer to all or an arbitrary one of these systems. Each POS system 3 is a system for managing POS terminal devices (further described below), which are installed in the respective store or shop, for issuing receipts, for example, on which advertising information (advertisements) may be placed. Reference numerals 4 and 6 denote servers connected to the Internet 10. Reference numerals 5a to 5e are client computers (referred to as client PCs below), e.g., personal computers (PCs) that may apply for having an advertisement placed. Although five individual client PCs 5a to 5e are shown reference numeral 5 will be used to refer to all or an arbitrary one of them.

A client PC 5 accesses ADS system 1 via server 4 through the Internet 10. The client PC 5 can be a personally owned personal computer, or a computer connected to the LAN or WAN of a particular organization, such as a company. The server 4 to which client PC 5 connects can belong to a separate ISP (Internet Service Provider), or be owned by the user of the client PC 5 himself. Server 4 will be referred to as ISP server hereinafter.

The ADS system 1 transmits an advertising placement application form in response to a request from client PC 5. Based on the obtained application form, client PC 5 inputs information into the application form and returns the input information as advertisement application information to the ADS system 1. The advertisement application information includes advertising information and certain ancillary information required for management purposes. The ADS system 1 stores the received advertisement application information and sends a payment specification form to the client PC 5. Exemplary forms are described in further detail later.

After confirming payment, for example, ADS system 1 distributes, by way of central computer 2, the advertisement application information, or at least part of it, to one or more of the POS systems 3 specified by client PC 5. It should be noted that while not shown in the figure, direct distribution to POS system(s) 3 bypassing central computer 2 is also possible by using a client-server system or other such in-house network system.

The POS system 3 that received the advertisement application information from ADS system 1 runs a process for printing an advertisement in addition to the information normally printed (such as the sales price of purchased items) on a receipt issued by a POS terminal device. The advertisement is printed according to the information received from the ADS system 1.

ADS system 1 can distribute the advertisement application information via the Internet 10 to other subscriber POS systems 7 through the server 6 which is, for example, of a type of an application service provider (ASP) server to which multiple individual shops are subscribing. A subscriber shop can be any type of commercial enterprise, but particularly includes, for example, hospitals, physician's offices, pharmacies, and small- and medium-size stores. In a hospital or pharmacy, for example, receipts, queuing number tickets, and other printed matter is issued by registers for calculating treatment fees and hospitalization charges, queuing number issuing devices for issuing queuing number tickets in the waiting order, and registers in pharmacies providing drugs according to a doctor's prescription. POS systems such as noted above, POS terminal devices used in subscriber POS systems, for example, cash registers, check counters and other devices such as queuing number issuing devices are collectively referred to in this invention as "POS terminal devices".

Subscriber POS systems can be large-scale systems. In this case, advertisement application information can be sent from the ADS system 1 via the Internet 10 to the subscriber store's central system 8, and distributed from there to individual POS systems. It is therefore possible to place an advertisement by means of a great number of POS terminal devices through the networks of plural corporations or organizations.

### ADS system

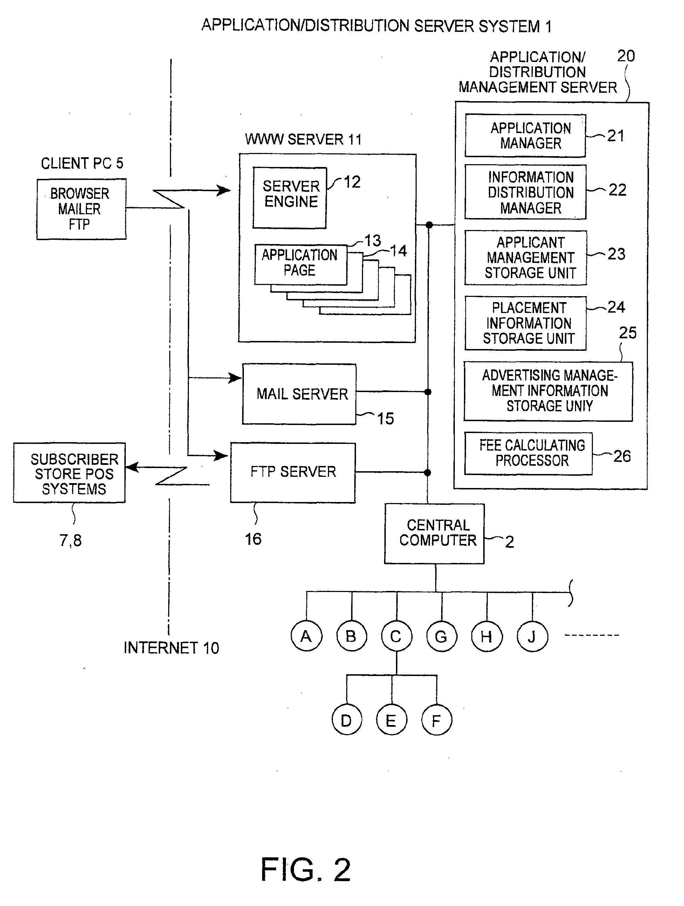

Fig. 2 shows the basic configuration of an ADS system 1. WWW server 11 stores a home page (not shown in the figure) and other Web pages and is connected to a data base (not shown in the figure) containing the information about the stores, shops, chain stores and other service businesses, and sends the home page or other Web page to a client PC 5 in response to a request from that client PC 5. The home page can be captured and viewed using a browser or other application program on the client PC 5. For example, assume that a client PC 5 wants to view the home page and apply to place an advertisement. The home page may be set up, for example, so that an application page transmission request is sent to the WWW server 11 when a particular place on the home page is clicked at. When an application page request from client PC 5 is received, server engine 12 of the WWW server 11 sends an advertisement application page 13 to the client PC 5.

The application page 13 presents an application form into which client PC 5 (its user) enters the advertisement application information, and sends this information to the ADS system 1. When the advertisement application information from client PC 5 is received, WWW server 11 of ADS system 1 passes this information to an application/distribution management (ADM) server 20. The ADM server 20 runs a particular process as necessary. The WWW server 11 and the ADM server 20 can be linked in this case by way of a common gateway interface (CGI), for example.

An advertisement that an applicant wants to be placed may consist of text data and/or image data, such as pictures, photographs, etc. Any method can be used for receiving such image data from the client PC 5. For example, image data can be sent as a file attachment to an e-mail message from client PC 5 to be received by mail server 15. It is also possible to embed an ID and password for an FTP server 16 in the application page 13 so that the image file is sent by file transfer protocol (FTP) automatically to an FTP server 16 by operating the application page 13.

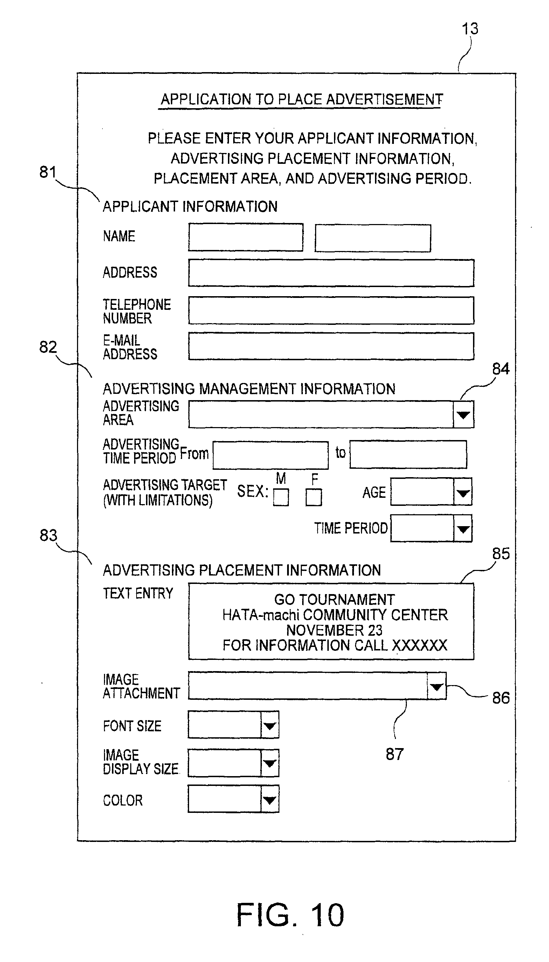

Application manager 21 of the ADM server 20 applies a specific process to data (the advertisement application information) input by processing the application page 13. In an exemplary application page described later with reference to Fig. 10, the advertisement application information includes applicant information identifying the applicant, and advertising information. The advertising information includes advertising placement information and advertising management information. The advertising management information includes certain restrictions, such as the advertisement distribution area (the area in which POS systems are to print the advertisement, or a group of selected POS systems that are to print the advertisement), advertising targets (to whom the advertisement should be presented), the advertising period (duration), an advertising time (time of the day), and a maximum copy number (the maximum number of receipts, tickets etc. on which the advertisement may be printed. The applicant information is stored in an applicant management information storage unit 23, the advertising management information is stored in an advertising management information storage unit 25, and the advertising placement information is stored in a placement information storage unit 24. These storage units 23 to 25 are preferably structured as a database, but individual files can be stored instead. Properly registered information stored in the above storage units is managed by information distribution manager 22, which runs an information distribution process.

The application manager 21 calculates an advertising fee and sends a corresponding payment page to the client PC 5 via WWW server 11. The advertising fee may be calculated taking account of restrictions included in the advertising management information, e.g., the type, advertising period, maximum copy number, advertisement distribution area, etc. The basis on which the fee is calculated is not critical to the present invention. The application manager 21 confirms the application when the fee specified on the payment page is paid, and finalizes the application transaction so that the information stored in storage units 23 to 25 becomes effective. Information distribution manager 22 then distributes, in accordance with the specified advertisement distribution area, all or part of the advertisement application information, i.e., data needed by the POS systems for processing and printing the advertisement, to the central computer 2 and/or, via the Internet, to ASP server 6. The central computer 2 then sends this data to the POS systems 3 in the advertisement distribution area specified by the client PC 5. It is possible, for instance, to specify distribution to only stores A, B, D, and F among POS systems A to J. It should be noted that an example of a hierarchical connection to the central computer 2 is shown in Fig. 2, but a client-server system architecture is also possible. The network can also be either a local area network (LAN) or wide-area network (WAN).

If there are subscriber POS systems 7, 8 of an external advertising placement service not connected by the ADS system 1 by an internal network, the data needed for advertising is transmitted via Internet 10. This transmission can be accomplished by the subscriber POS systems 7, 8 periodically requesting file transmission from FTP server 16, or by ADS system 1 sending to an FTP server (not shown in the figure) of the subscriber POS systems 7, 8. If these subscriber POS systems 7, 8 are connected by a communications line other than the Internet, transmission by such communications line is also possible. In addition to these methods, transmission using a mail system is further possible.

In addition to the above noted data distribution process, information distribution manager 22 also runs a process for terminating an advertisement and calculating additional advertising fees or re-calculating the advertising fees based on the advertising management information. More specifically, if the advertising period, for example, is specified in the advertisement managing information, the information distribution manager 22 instructs the POS systems involved to stop printing the particular advertisement when the advertising period is over. If a maximum copy number is specified in the advertisement managing information, the information distribution manager 22 regularly collects from the central computer 2 or subscriber POS systems the respective copy count, i.e., the number of advertisements actually printed, calculates the total copy number, and instructs the POS terminals to stop advertising when the total copy number reaches the specified maximum copy number. An additional advertising fee may be calculated and charged when the advertiser applies for extending the advertising term, for instance. A recalculation of the advertising fee may apply where for some reason advertising is stopped before the advertising period is over or the maximum copy number is reached.

If distribution is limited to only POS systems connected to the central computer 2, distribution and terminating management such as described above can be handled by the central computer 2.

### Client PC

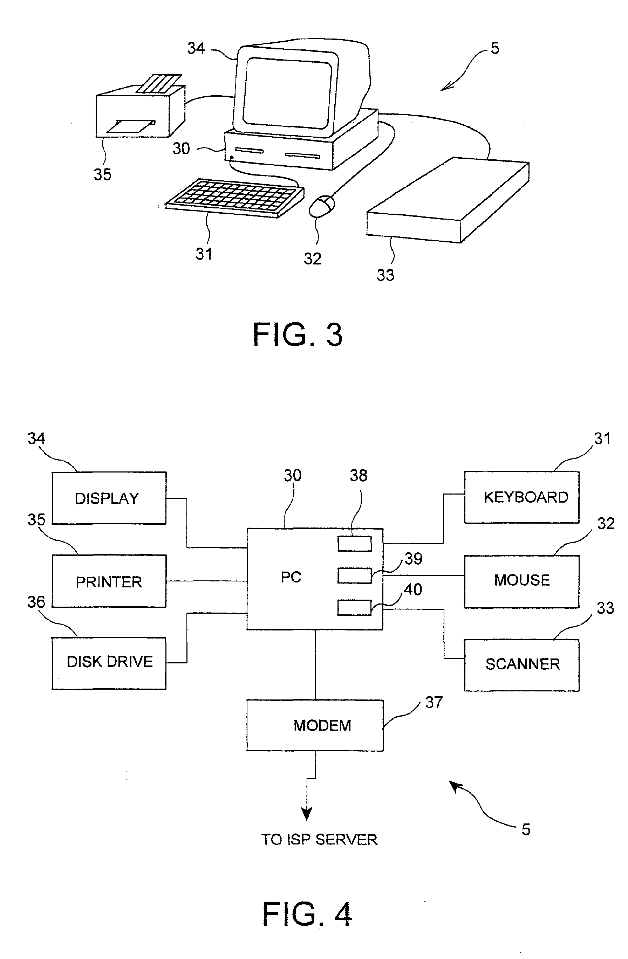

An example of a client PC 5 is shown in Fig. 3 and Fig. 4. Client PC 5 can be a general purpose PC used in the home, or a PC connected to an in-house corporate LAN. A client PC 5 using a general purpose PC unit 30 used in the home is described here.

In a basic configuration, PC unit 30 has a keyboard 31, mouse 32, display 34, disk drive 36, and modem 37 connected thereto; a scanner 33 for capturing an image of a picture, a printer 35 for printing image data and data processed by the PC unit 30, and other devices can also be connected.

A CPU, memory, and various registers (not shown in the figure) are provided inside PC unit 30 with the basic operation thereof controlled by a general purpose operating system (OS). Windows (registered trade mark) and Macintosh (registered trade mark) are typical examples of a general purpose OS. A browser 38 is generally loaded on such a client PC 5, enabling an HTML screen to be obtained from WWW server 11 via Internet 10 and presented on display 34. E-mail software (a mailer) 39 and FTP (file transfer protocol) software 40 are also standard programs provided as programs for connecting to the Internet.

A browser 38, mailer 39, and FTP application 40 are standard software provided with a general purpose PC system. Sending data to and receiving data from ADS system 1 via the Internet 10 is possible using these programs in client PC 5.

Connecting to the Internet 10 from a home client PC 5 generally requires a contract with an ISP enabling the client to connect to the ISP server 4 via telephone lines. Because digital/analog conversion, etc., is necessary to connect to a telephone line from a client PC 5, connection to the telephone network is made using a modem 37. A DSU (digital line termination unit) and TA (terminal adapter) (not shown in the figure) are required to use ISDN (integrated service digital network).

A client PC 5 having the above-noted functions as standard software can access ADS system 1 via the ISP server 4, and access a home page or application page 13 from WWW server 11. The captured page can be viewed by means of the browser 38 on display 34, and data can be entered into the displayed form using keyboard 31 and a pointing device such as a mouse 32.

If a particular place on the application page 13 is clicked at when the required data entry is completed, or if accessing other necessary information is desired, particular data is sent to the ADS system 1 according to data linked to the place on the page 13 that was clicked at. The ADS system 1 receiving this data then responds by running a corresponding process, such as transmitting a another Web page specified the data received from the client PC 5.

With client PC 5, an image of a picture or photograph for placing in the advertisement can be captured using scanner 33. Corresponding image data may be stored ("store" as used in this specification means storage to memory as well as recording on a disk, such as disk drive 36, or a CD). The stored image data can also be processed to be suitable for the advertisement and stored as a file.

### POS system and POS terminal device

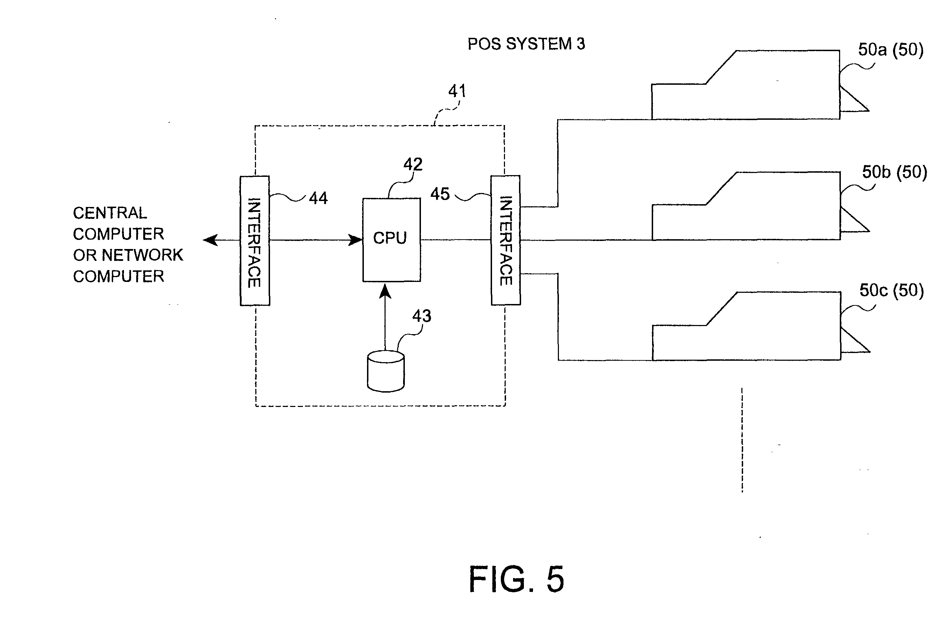

An exemplary configuration of a POS system 3 is shown in Fig. 5. This POS system 3 comprises a store server 41 and a plurality of POS terminal devices 50 (three terminal devices 50a to 50c are shown) connected to the store server 41. It should be noted that a store server 41 is not necessarily provided in each store, instead one can be provided for plural stores.

The various parts of store server 41 are controlled by CPU 42. Store server 41 communicates with central computer 2 through interface 44 and with POS terminal devices 50 through interface 45 on the side of POS terminal device. Store server 41 receives the advertisement application information or part of it from central computer 2, and stores this information on a hard disk or other storage device 43.

A product database can be stored in storage device 43. In this case, when CPU 42 receives a product identification number from a POS terminal device 50, it sends the price of that product to the POS terminal device 50.

The store server 41 can send product sales information to the central computer 2, and can obtain stock plans, updated product prices, as well as advertising placement information that is not customer dependent, from central computer 2. Direct communication with ADS system 1 is also possible by connecting to a computer communication network using telephone lines, for example, through a network interface not shown in the figure. The store server 41 functions as a storage unit for various data, and in conjunction with POS terminal devices 50 functions as an advertisement printing control means.

Note that while the configuration of a POS system 3 is shown in this example, subscriber POS systems 7, 8 connect to the Internet 10 through an ISP or other server 6 rather than connecting through interface 44 to central computer 2 (see Fig. 1).

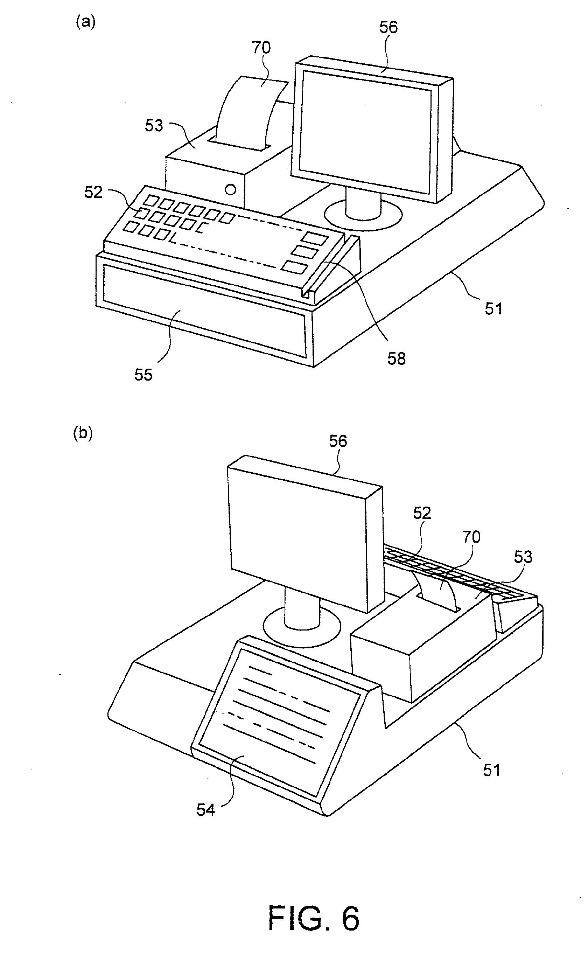

A convenience store POS terminal 51 is shown as an example of a POS terminal device 50 according to the present invention in Fig. 6. POS terminal 51 has an operator keyboard 52, printer 53, operator display 56, cash drawer 55, card reader 58 and information selection device 54 having a display module (not shown if the figure) for a customer. When there is a purchase request from a customer in a convenience store, the customer's age, sex, and other customer information is first entered. This data is collected and analyzed by central computer 2 as marketing strategy information, such as for sales analysis. After entering the customer information, the purchased products are registered, and when all product registrations are completed, a receipt 70 having the purchased items, total price, and sales tax printed thereon is issued from printer 53 and passed to the customer.

It should be noted that a product registration as this term is used herein includes processes such as reading a bar code, etc., on the product to obtain a product ID, get the product price from the storage device 43 of store server 41, store the name, price, and quantity of the purchased product in storage device 43 or POS terminal 51, and subtract the purchased quantity from the inventory data.

A POS terminal device 50 used in the present invention can further print advertisements on the receipt 70, making it possible to advertise by handing this receipt with one or more advertisements printed thereon to the customer. In the case where the printer has two print heads that can print on both sides of the receipt, respectively, the advertisement can be printed on the rear side of the receipt.

POS terminal 51 in Fig. 6 differs from a conventional POS terminal in that it has an information selection device 54. This is not essential to the present invention, but is a device enabling the customer to select one or more advertisements from a menu of advertisements. The information selection device 54 has a display part and an input part so that the desired advertisement(s) can be selected, using the input part, from a selection list displayed on the display part. The input part can be a touch panel on the screen of the display part, or can be a customer keyboard (not shown in the figure). It is also possible to have the customer tell the operator the item number(s) of the desired advertisement(s) so that the selection is entered at the operator keyboard 52. A specific process is described further below.

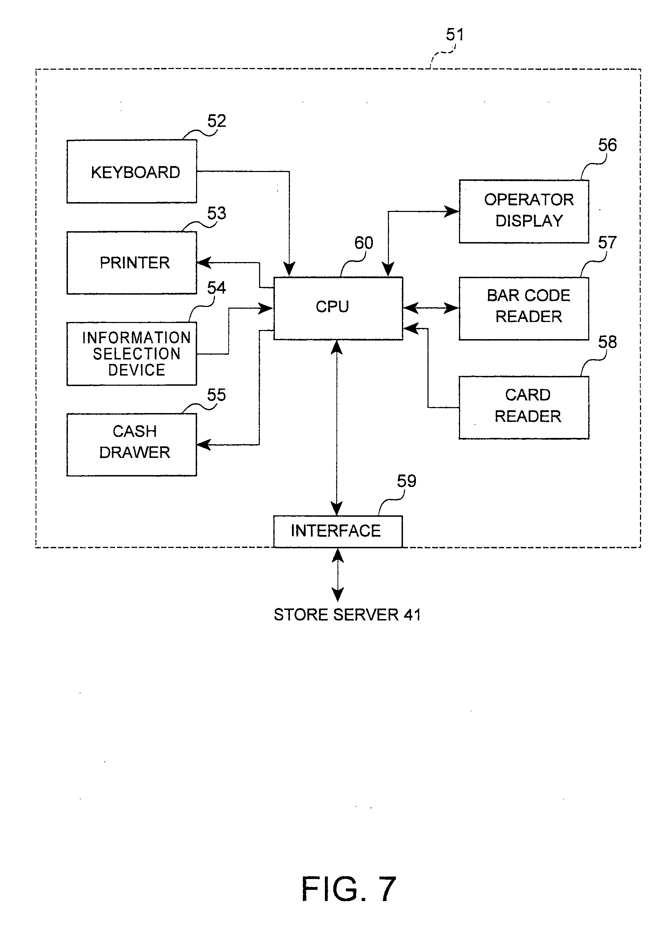

Fig. 7 is a block diagram showing a more detailed basic configuration of POS terminal 51. POS terminal 51 has operator keyboard 52, printer 53, information selection device 54, cash drawer 55, operator display 56, bar code reader 57 and card reader 58 connected to CPU 60, which controls each of these devices. CPU 60 communicates with store server 41 through interface 59.

Printer 53 is typically a receipt printer, but if the printer is capable of printing on both the front side and the back side of a receipt paper as described above, the advertisement(s) can be printed on the back side of receipt. In the case where printer 53 is a color printer, advertisements can be printed in color to achieve an even greater advertising effect.

It should be noted that while a convenience store POS terminal 51 is used as an example of POS terminal device 50 in Fig. 6 and Fig. 7, an accounting register in a hospital or pharmacy can be used as POS terminal device 50 as long as the device can register a sales transaction and issue receipt 70.

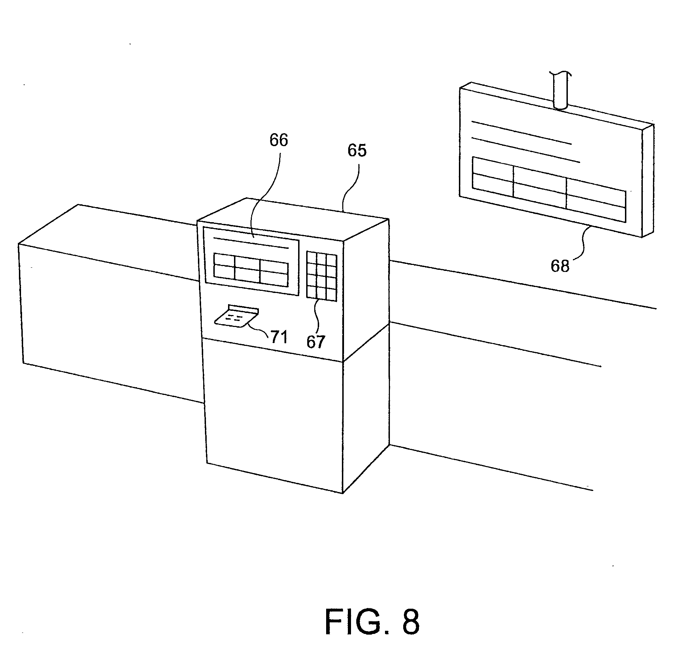

As another example of POS terminal device 50, Fig. 8 shows a queuing number issuing device 65 such as used in a bank, securities company, or hospital. A queuing number ticket having a customer number is commonly issued at such places. It is often necessary to wait a relatively long time until one's number is called for service, particularly in a bank or hospital. If information about local events can be provided while customers are kept waiting, there is a strong possibility that the information will be read with interest. Placing advertisements on such queuing number tickets is therefore an extremely effective means of advertising.

This queuing number issuing device 65 can be configured to automatically print only predetermined advertising information. However, as shown in Fig. 8, it is also possible to provide the queuing number issuing device 65 with a display part 66 and keyboard 67 so that the customer can select the advertisement(s) to be printed. A touch screen could be provided on display part 66 so that selections are made directly from the display part and the keyboard 67 can be omitted. The customer selects the desired advertisements) from those displayed on display part 66. Customers waiting in line have available time with nothing to do, and it is therefore preferable to allow plural selections.

A large-scale display 68 is shown in Fig. 8. People waiting for their turn in a waiting room can thus be informed that information is available. By providing such a display 68 in the waiting room, someone waiting who is interested in the information can use the queuing number issuing device 65 or other printing device (not shown in the figure) to obtain the desired information,

### Procedure for applying for placement of an advertisement

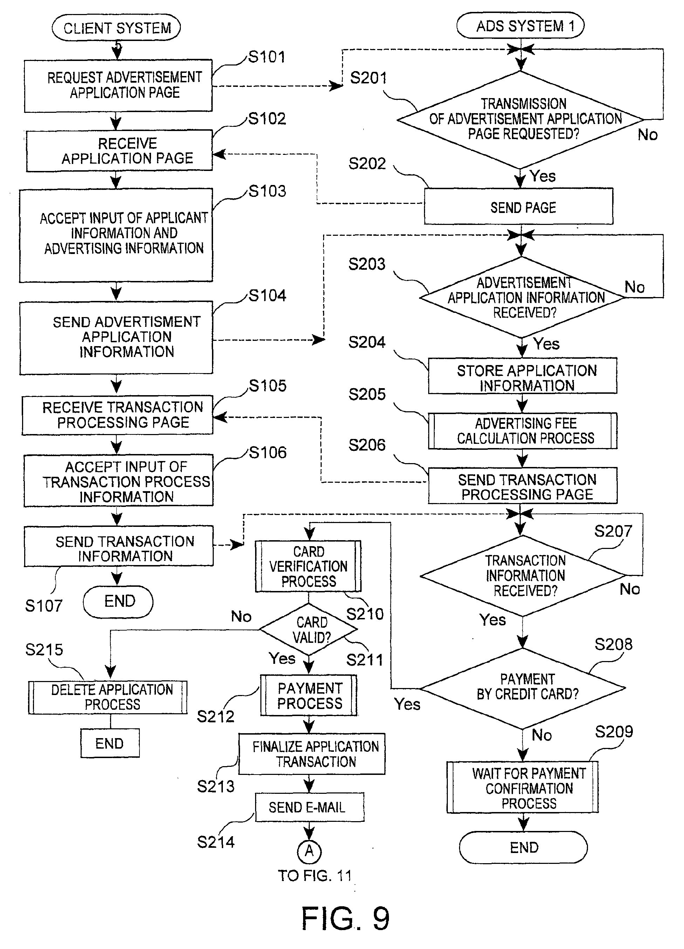

A procedure for applying to place an advertisement from a client PC 5 is described using Fig. 9, Fig. 10, and Fig. 11.

### Advertisement application process

### (1) Application page sending and receiving

When a client PC 5 accesses the home page of ADS system 1 and selects on that home page to apply for placing an advertisement, the client PC 5 browser 38 requests the ADS system 1 to send the advertisement application page (S101). When the WWW server 11 of ADS system 1 receives this application page transmission request (S201 returns *Yes*), it sends application page 13 to client PC 5 (S202). To simplify the following description it is assumed below that application page 13 is on the WWW server 11 and the application page is sent to the client PC 5 by WWW server 11 alone. It will be obvious that in reality the input data from client PC 5 must be received by ADS system 1. To accomplish these processes, interaction by programs on the WWW server 11 and other servers 15, 16, 20 is enabled by a common gateway interface (CGI), and application page 13 is sent to client PC 5.

When client PC 5 receives the application page 13 from ADS system 1 (S102), its browser 38 displays the application page 13 on display 34. Fig. 10 is an example of a display screen.

### (2) Input into the application page and sending input data

The person making the application (the advertising applicant) enters the required information on the form he sees when the application page 13 is displayed (S103). Note that this application page 13 is an example, and other information can be requested or some of the entry items can be omitted.

First, the advertising applicant enters applicant information 81 such as his name, address, telephone number, and e-mail address according to the form of the application page 13 displayed on the screen. The e-mail address is used for various contacts from the advertising placement service provider. In a typical example the e-mail address is used to confirm the application and to send a bill and a receipt for fees.

Next, advertising management information 82 is entered. This advertising management information 82 includes advertising restriction information as has been explained above. The information 82 includes, for example, information specifying the advertisement distribution area or place, information specifying the advertising period, and other such information, as well as information specifying the advertising target. The advertisement distribution area can be designated by indicating individual store names or area names. For example, specific states, prefectures, counties, districts, cities, towns, villages, or streets could be identified for selection. An entry section of a selection box containing a list of the selectable store names or regions that can be selected preferably appears when check box 84 is pointed to using a pointing device for specifying a store name or specify a region. Furthermore, if particular stores are specified for advertisement placement, it is also possible to designate, instead of or in addition to the advertising period, the maximum copy number.

The term "advertising target" (or simply "target") refers to the type of customer whose receipts should carry a particular advertisement. Advertising becomes much more efficient when the people to receive an advertisement are selected according to the type of the advertisement. This is beneficial for both the advertiser and the advertising placement service provider. The advantage for the advertiser is that the advertising hit ratio is increased by providing advertisements to selected targets. On the other hand, identifying particular targets offers the advertising service provider the advantage of being able to effectively use the space available for placing advertisements. In other words, advertising media according to the present invention can only use the extremely limited space on a receipt or queuing number ticket, and effectively utilizing this available space is extremely important. If the target customers to whom an advertisement is provided can be selected, there remains space on the receipts of other customers for other advertisements.

There are cases in which identifying the specified advertising target can be accomplished using POS systems 3 but also cases in which this is not possible. That is, such identification is possible only in stores in which an operator can observe the customers and enter the customer age range and/or sex at the POS terminal device 50. The advertising applicant must be made aware of such restrictions when the application is made. This is why the advertising target line in Fig. 10 has the qualifier "with restrictions". The form can also be designed so that clicking this displays a list of limited items, area restrictions, or stores with restrictions.

The advertising placement information 83 is entered after the above input is completed. In the first place this advertising placement information includes the text and /or graphics elements to be printed as the advertisement. In addition, the advertising placement information may include formatting information. The example in text entry box 85 shows text for advertising event information about a go tournament. The text can be entered in the format desired for the actual print-out, or the actual format could be specified according to particular rules. The advertising placement information could also include graphics or image information. In this case the image entry box 87 is used for input. Attaching an image is preferably accomplished by displaying a file directory when check box 86 in the image input part is pointed to so that a previously generated file can be easily marked for attachment.

Various methods can be used for sending an attached image file to ADS system 1; a method using FTP and a method using e-mail are shown in this example. In the case of FTP transfers, the image entry box 87 is linked to the ID and password of FTP server 16 of ADS system 1 so that the file attached by image entry box 87 is sent to the FTP server 16. In the case of e-mail the image entry box 87 is linked to the mail address of the ADS system 1, and the file attached by image entry box 87 is sent as a file attachment to an e-mail message. Alternatively, the FTP server's ID and password are disclosed on the application page 13 and an applicant ID is assigned, and the applicant separately transfers the file using an FTP application in a process separate from that processing the application page 13. It is also possible to disclose the e-mail address of the ADS system 1 so that files can be sent attached to e-mail messages in a separate process.

Next, the font size of the text entered in the text entry box 85 is specified. This is also preferably accomplished by displaying a selection box. It is also possible to enable specifying the display size of an image. In this case, too, a specific size can be selected from a selection box. Finally, it is also possible to enable specifying the color of the text font and the color of the image. For example, monochrome, color printing, or a particular color could be selected from a selection box. When the above input operations are completed, the input data is sent to ADS system 1 as the advertisement application information (S104).

### (3) Receiving advertisement application information and fee calculation process

When the ADS system 1 receives the advertisement application information from client PC 5 (S203 returns *Yes*), respective parts of the information are stored by information distribution manager 22 in applicant management information storage unit 23, placement information storage unit 24, and advertising management information storage unit 25, respectively, as described above (S204). The advertising fee payment process has not been completed at this time, and data is therefore stored temporarily.

Next, a fee calculation process is run to calculate the advertising fee (S205). The fee calculation process is executed by fee calculating processor 26 based on conditions such as the advertising management information stored in advertising management information storage unit 25, including the advertising period, advertisement distribution area, and the advertising target, and whether the advertising placement information stored in placement information storage unit 24 is image and/or text, or requires color. When the fee calculation process ends, the WWW server 11 sends transaction processing page 14 containing the advertising fee to client PC 5 (S206),

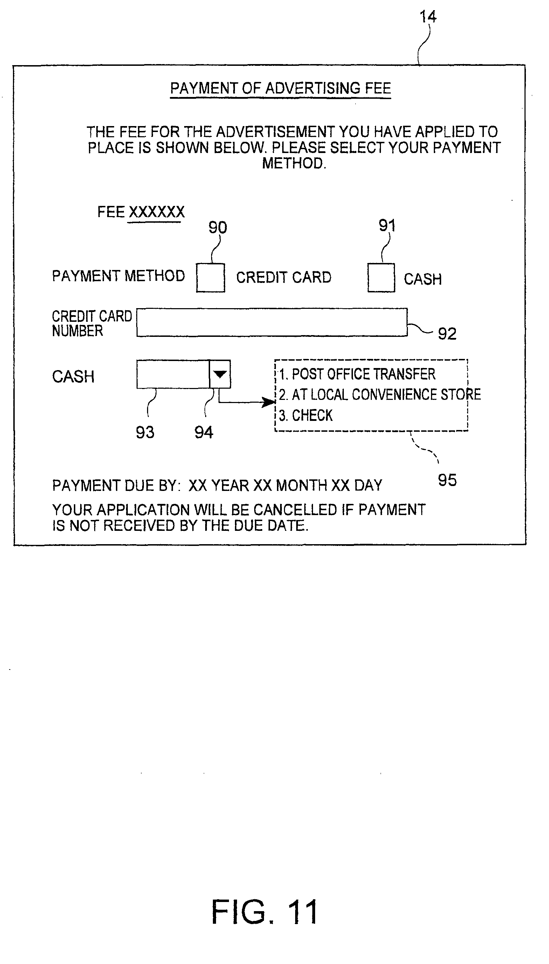

When client PC 5 receives transaction processing page 14 (S105), the method of paying the advertising fee is specified and other specific input is entered according to the payment specification form (S106). An exemplary payment specification form presented by the transaction processing page 14 is shown in Fig. 11. First, either credit card or cash is selected as the payment method using check box 90 or 91. If payment by credit card is selected, the credit card number is entered into entry box 92. The credit card number is preferably encrypted for transmission. Encryption in this case can be accomplished by, for example, a public and private key encryption method.

If payment by cash (including payment by cheque) is selected, the place where payment will be submitted or the payment method is selected using entry box 93. In this case it is preferable to open selection box 95 by pointing to check box 94 as shown in Fig. 11 so that one of plural payment methods can be selected, including payment by postal account transfer, payment at a local convenience store or bank, or payment by cheque. When entering the transaction processing information is completed, client PC 5 sends the transaction processing information to ADS system 1 (S107).

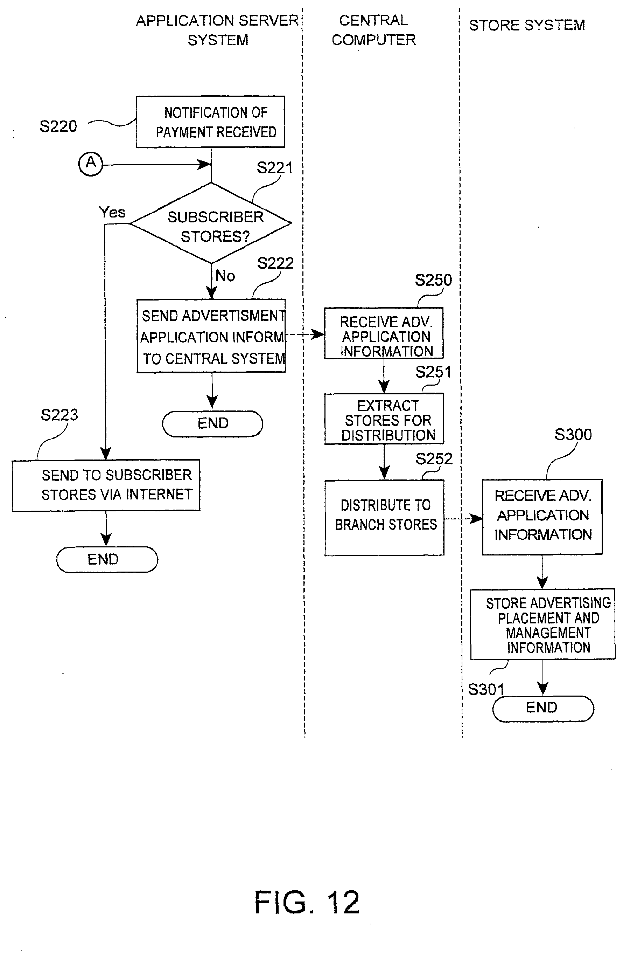

When the ADS system 1 receives the transaction processing information (S207 returns *Yes*), application manager 21 of ADM server 20 confirms payment by credit card or cash (S208). In case of credit card payment, the validity of the credit card is confirmed using the CAT system, for example (S210). If the credit card is authorized (S211 returns *Yes*), a payment process is run (S212) to formally register the advertising application. This authenticates the advertisement application and confirms storage in the storage units 23 to 25 of ADM server 20 (S213). A credit card transaction voucher and receipt are then sent from mail server 15 (S214), the process branches to A in Fig. 12, and a process for sending the advertisement application information to central computer 2 and/or subscriber POS systems 7, 8 is accomplished.

If the credit card validation process (S210) determines that the credit card is not valid (S211 returns *No*), a process for deleting the application is accomplished (S215). This application deleting process deletes the data that have been temporarily stored in storage units 23 to 25 of ADM server 20, and notifies the advertising applicant (via PC 5) by e-mail that the application was cancelled.

If the credit card is not valid it is also possible to inform the advertising applicant that the credit card is not valid so that another payment method can be selected without deleting the application.

If payment by a method other than a credit card is selected (S208 returns *No),* a payment process and process to wait for confirmation of payment is performed (S209). More specifically, an invoice is sent by e-mail. It is also possible to enable downloading by FTP an invoice for payment sent to the advertising applicant.

The advertising applicant then makes payment to the closest branch (convenience store or other) of the selected store based on the invoice. When this payment is completed, a notice of completion of payment is sent from the respective POS system 3 to ADM server 20 through central computer 2 or a corporate network not shown in the figures. When the payment is by postal transfer or cheque, the ADM server 20 is similarly notified. The ADM server 20 registers payment for the application, and the application process stops until there is a notification of completion of payment.

### (4) Distributing advertisement application information to POS systems

A process for distributing the advertisement application information to POS system 3 from ADM server 20 of ADS system 1 is described using Fig. 12.

When payment of fees, is completed, a payment completion notice is sent, for example, from a POS system 3 to ADS system 1. When the payment completion notice is received (S220), or when payment is made by credit card (following step S214 in Fig. 9), ADM server 20 determines whether the advertisement application information contains subscriber POS systems 7, 8 in the specified advertisement distribution area (S221). If subscriber POS systems 7, 8 are not included, ADM server 20 sends the advertisement application information or part of it to central computer 2 (S222). When central computer 2 receives the information (S250), it confirms the advertisement distribution area information in the advertisement application information and extracts the POS system(s) 3 to which distribution is indicated (S251), and then distributes the advertisement application information or part of it to the corresponding POS system(s) 3 (S252). The store server 41 of a POS system 3 that received advertisement application information (S300) stores the advertising placement information and advertising management information in storage device 43 (S301).

Preparing the POS system 3 to print the advertisement on receipts, for example, by means of POS terminal device 50 is thus completed. Some of the restrictions in the advertising management information can be managed by one or both of store server 41 and ADM server 20. In particular, the advertising period can be easily managed by either server because each has an internal calendar. The total copy number, however, must be managed by the ADM server 20 because this number cannot be determined by the store servers or central computer 2 or central POS system 8. If subscriber a POS system 7, 8 is included in the advertisement distribution area, transmission to the subscriber POS system 7, 8 is through Internet 10 and server 6 (S223). Transmission can be accomplished by FTP or other file transmission protocol. If the subscriber POS system 7, 8 has a central computer (see Fig. 1), the same process as for distribution from central computer 2 to POS systems 3 is accomplished.

### Accounting process and advertisement printing process

### (1) Customer selection from fixed selection list

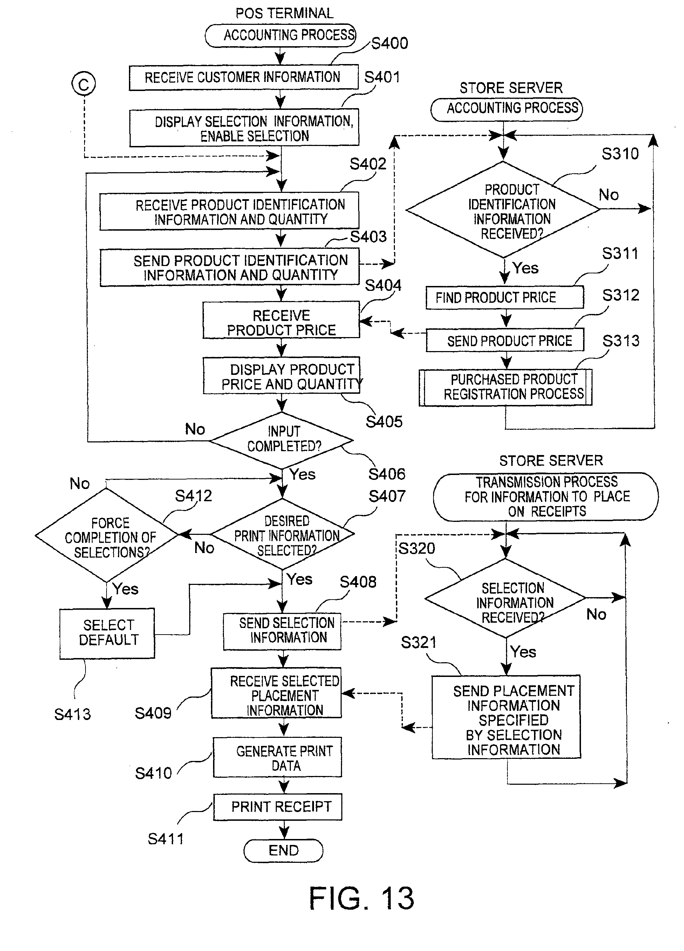

Printing of an advertisement is described using Fig. 13. When a customer requests to pay for purchased products (accounting process) at POS terminal 51, the operator (clerk) first enters the customer's sex, age range, and possibly other customer information, and the CPU 60 of POS terminal 51 receives the input (S400). Next, CPU 60 displays a specific selection list of advertisements on information selection device 54 to enable selection of one or more of them (S401).

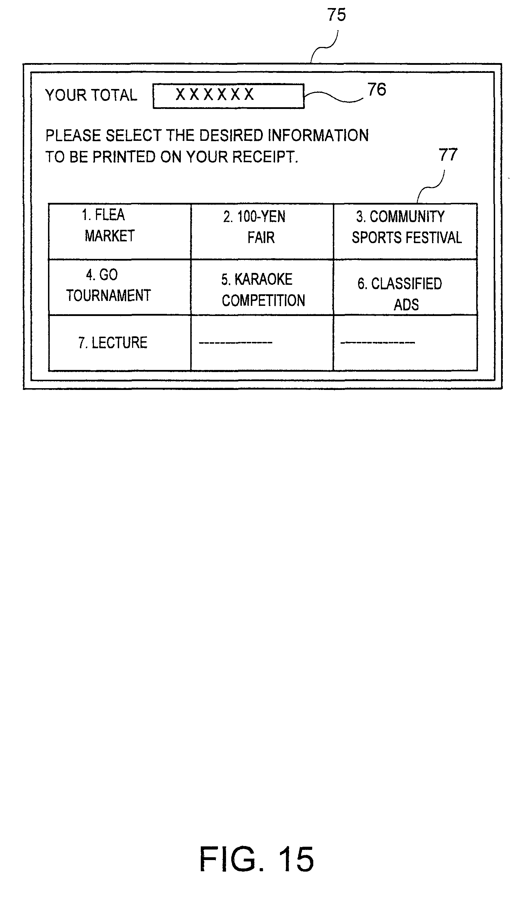

An exemplary display screen 75 on information selection device 54 including such selection list is shown in Fig. 15. A transaction amount is displayed in transaction amount display box 76 in the top line of the display screen 75. This transaction amount is the transaction total accumulated each time a purchase transaction is registered. Reference numeral 77 in the figure denotes the selection list. Selections 1 to 7 are available in this example. The customer can select one or more desired items from the list. Various selection entry means could be used. In this exemplary embodiment, however, the display screen is a touch screen so that when list items are presented in a matrix in this example the customer can simply touch the desired item to make a selection.

Returning to the flow chart in Fig. 13, after step S401 CPU 60 accepts input of the product identification information and product quantity information by means of bar code reader 57 and/or operator keyboard 52 (S402), and sends this identification information through interface 59 to store server 41 (S403).

When the server 41 receives the product identification information (S310), it finds the product price in the product database stored in storage device 43 (step S311), and sends this price information to the POS terminal 51 (S312). A product registration process for the purchased product is then accomplished (S313), and the next product transaction process is awaited (S310).

POS terminal 51 receives the product price information (S404), and displays the price information on operator display 56 and information selection device 54 or a customer display unit (not shown in the figure) (S405).

It is then determined whether entering product identification information has been completed (S406). Entering the product identification information has been completed if, for example, the operator presses a total key on the operator keyboard 52.

If data entry is not over (step S406 returns *No),* the procedure loops back to step 5402. If data entry is over (step S406 returns *Yes*), CPU 60 confirms whether the customer has selected information from information selection device 54 (S407); if a selection has been made, the selection information is sent through interface 59 to store server 41 (S408).

When the store server 41 receives the selection information (S320 returns *Yes),* the corresponding advertising placement information is sent to POS terminal 51 (S321). CPU 60 of POS terminal 51 then receives the advertising placement information (S409).

The POS terminal 51 then combines the advertising placement information received in step S409 and the transaction information generated in steps S402 to S405 to generate print data (S410), prints a receipt by means of printer 53 (S411), and then the printing process ends. Various methods of combining the information are possible, including setting aside an advertisement area on the receipt and printing the advertisement in this area, or first printing the advertisement and then printing the transaction information.

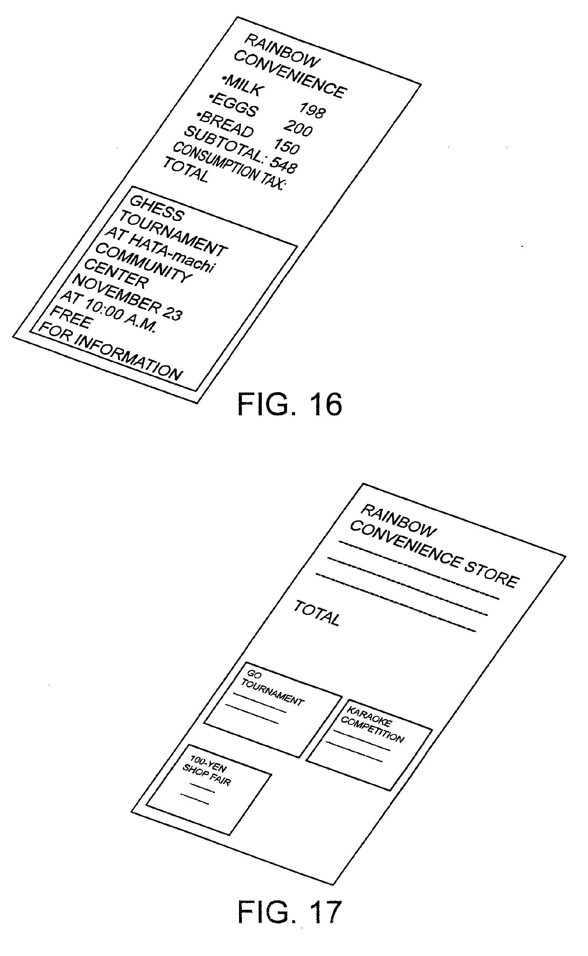

Print samples of receipts and a queuing number ticket are shown in Fig. 16 to Fig. 19.

Fig. 16 shows an exemplary receipt having an advertisement printed below the transaction data. Fig. 17 shows another receipt having plural advertisements printed at reduced scale below the transaction information. It is thus also possible to enable plural selections with the selected advertisements printed reduced in size.

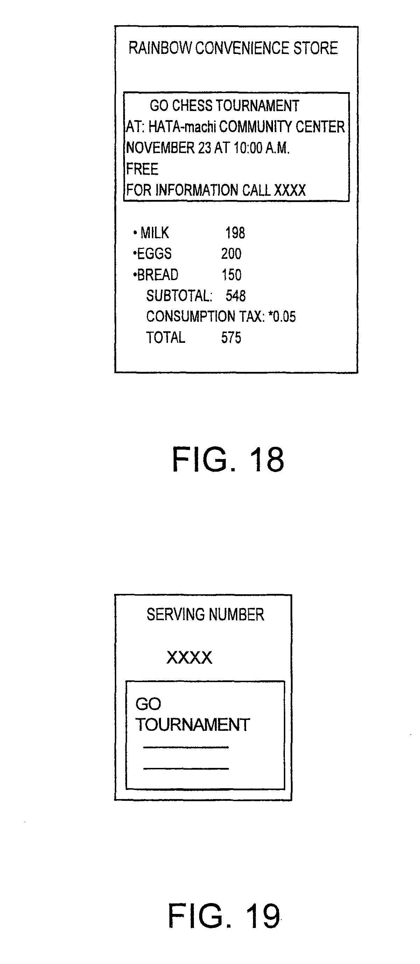

Fig. 18 shows an example in which an advertisement is printed at the top of the receipt, and Fig. 19 shows an example in which an advertisement is printed on a queuing number ticket.

### (2) No customer selection

Although it was explained with reference to Fig. 13 that the customer selects from the selection list using information selection device 54, it is also possible to automatically print one or more particular advertisements without having the customer make a selection. In this case there would be no need to wait for a customer's selection with the advantage of faster processing. This is particularly effective in a queuing number issuing system.

It is also possible with POS terminal 51 for store server 41 to select and print the best advertisement according to the customer's sex, age range, and/or occupation and/or other entered customer information. For example, the CPU 42 of store server 41 could compare the customer information with advertising target information stored in storage device 43 to select the advertisement for which the advertising target information and customer information match, and thus print the best suited advertisement. If there are plural matches, it is possible to select any one of them randomly or according to the frequency of use, for example.

### (3) Customer selection from adaptive selection list

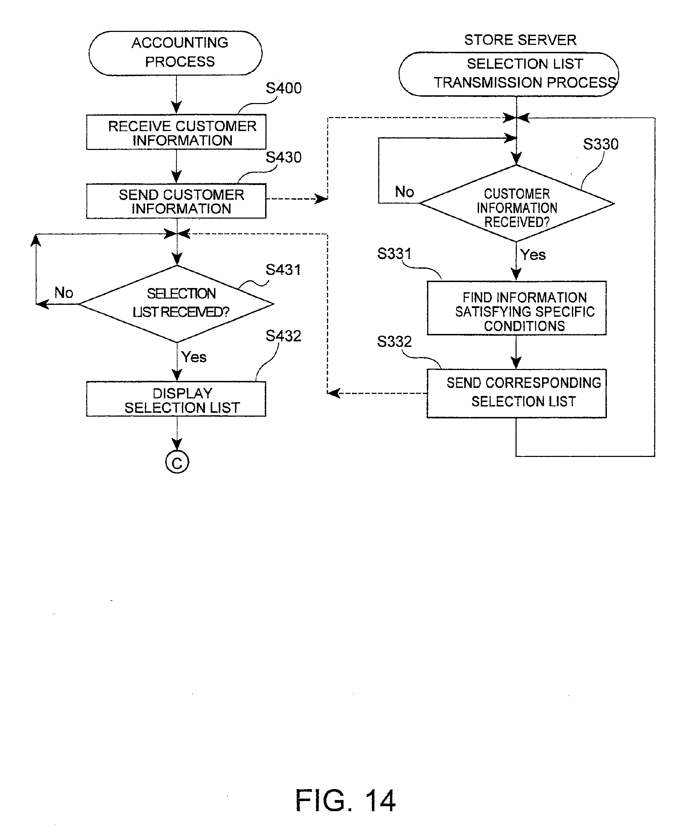

Next, a process for adaptively composing the selection list offered to a customer according to the customer class is described using Fig. 14.

The CPU 60 of POS terminal 51 receives customer information entered by the operator when a customer requests a transaction using the same process shown in Fig. 13 (S400). When customer information is received, CPU 60 sends that information to store server 41. When store server 41 receives the customer information (S330 returns *Yes),* it finds advertisements whose advertising target conditions correspond to the customer information (S331).

When the search ends, a selection list is composed to include all advertisements found in step S331. This selection list is sent to POS terminal 51 (S332). POS terminal 51, having received the selection list (S431), displays the selection list on information selection device 54, enabling the customer to select an entry (S432). Processing then continues with step S402 in Fig. 13.

It is thus possible to provide more appropriate advertisement by displaying as a selection list of only those advertisements suitable to the advertising target.

It should be noted that the above description explains a system whereby an undetermined number of people can access the application server via the Internet and apply for advertising placement, but a configuration enabling only members of a certain group to apply is also possible.

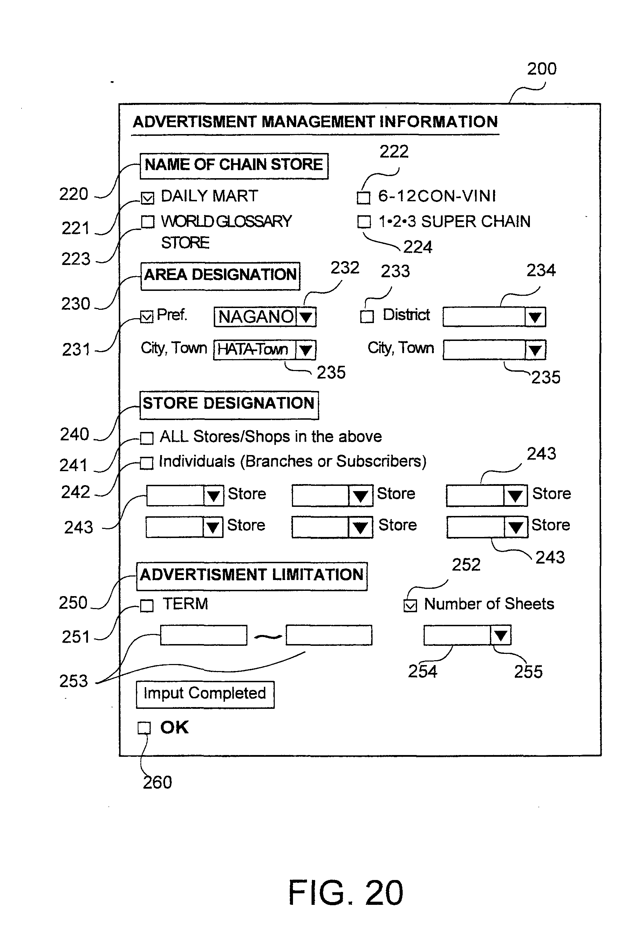

Fig. 20 shows another example of the advertising management information part as an alternative to that on the advertisement application page shown in Fig. 10.

In the store name selection item 220, the advertising applicant first selects, from among the supermarkets, convenience stores, and other chain stores subscribing to the distribution service, the chain stores to which the advertisement is to be distributed using entry boxes such as check boxes 221, 222, 223, 224. More than one check box can preferably be selected at the same time.

Whether the advertisement distribution area is specified by, for example, prefecture or district is first selected in advertisement distribution area selection item 230 using entry boxes including check boxes 231, 233 and pull-down menus 234, 235. The desired prefecture or district can then be selected from pull-down menus 232, 234 wherein the prefecture names and district names are prepared beforehand in the server. If a prefecture is specified, pull-down menus 235, 236 additionally enable specific cities, towns or villages within the selected prefecture to be targeted for distribution. Plural cites, town, and villages can preferably be selected.

Store selection item 240 enables selection of all stores within the selected advertisement distribution area or individual stores using entry boxes of check boxes 241, 242. If individual checkbox 241 is selected, pull-down menus 243 enable plural individual stores to be selected. The store names are also registered in the server, beforehand.

The restrictions selection item 250 enables the advertising applicant to limit the advertising period, i.e. term and/or the copy number, i.e., number of sheets to be issued, using entry boxes of checkboxes 251, 252. If the advertising period checkbox of "TERM" 251 is selected, the cursor moves to the date entry boxes 253 and further data entry is disabled until the dates are entered (or checkbox 251 is deselected). If the copy number checkbox 252 is selected, the cursor moves to the copy number entry box 254 to enter the number. Advertisement managing information entry is then completed. Note that a pull-down menu 255 can be used instead of or additionally to copy number entry box 254 so that units such as 100,000 or 1,000,000 can be more easily entered.

When the complete data entry checkbox 260 is clicked, the advertisement managing information is sent to the central computer 2, thus enabling the distribution manager 22 to control distribution to the selected stores. If a copy number is specified, the number of advertisements printed in each of the stores is accumulated by the central computer 2, and subsequent printing is blocked when the specified copy number is reached.

## Claims

1. A network system comprising:
a server system (1),
a client PC (5) adapted to connect via the Internet (10) to the server system (1),
POS systems (3, 7) each connected to a respective POS terminal device having a display device (54, 56) and a printing device (53),
first means (11) for storing an application page (13) containing an advertising placement application form;
second means (11) for sending the application page (13) to the client PC (5) in response to a request from the client PC (5);
third means (11, 15, 16, 20) for receiving and storing input information containing advertising placement information and POS system specifying information input according to the application form at the client PC (5);
fourth means (22) for distributing specific data of the input information to one or more of said POS systems (3, 7) specified by said specifying information; and
control means for controlling printing of an advertisement in accordance with the advertising placement information by means of the printing device (53) of the one or more POS systems (3, 7) to which said specific data is distributed.

2. A network system of claim 1, further comprising:
means (26) for calculating an advertising fee based on the input information;
means (11) for storing and sending the calculated fee information to the client PC (5) that returned the input information; and
means for confirming fee payment.

3. A network system of claim 1 or 2, wherein said plurality of POS systems (3, 7) are installed in a plurality of branches or subscriber stores of a chain store.

4. A network system of claim 3, wherein the application page (13) contains an entry box enabling the client PC (5) to input said specifying information by selecting at least one place name from among a plurality of names of places or area where the branches or subscribers exist.

5. A network system of claim 3, wherein the application page (13) contains an entry box enabling the client PC (5) to input said specifying information by selecting one or more of chain stores where an advertisement can be placed.

6. A network system of claim 3, wherein the application page (13) contains an entry box enabling the client PC (5) to input said specifying information by selecting at least one branch store name or subscriber store name from among a plurality of branch store names or subscriber store names where an advertisement can be placed.

7. A network system of any one of the preceding claims, wherein the application page (13) enables specifying one or more conditions restricting placement of the advertisement.

8. A network system of claim 7, wherein the application page (13) contains a check box enabling specification of an advertising period as one of the conditions.

9. A network system of claim 7 or 8, wherein the application page (13) contains a check box enabling specification of a maximum allowable number of copies of the advertisement as one of the conditions.

10. A network system of any one of claims 7 to 9, wherein the application page (13) contains a check box enabling specification of a time period in a day throughout which the advertisement is to be printed as one of the conditions.

11. A network system of any of the preceding claims, wherein the application page (13) contains a check box enabling specification of a target to whom the advertisement is to be presented.

12. A network system of any one of the preceding claims, wherein at least one of said POS systems (3, 7) has at least one POS terminal device (51) with a printer (53) for printing receipts (70), and advertisements are printed on the front side or back side of the receipts (70).

13. A network system of any one of the preceding claims, wherein at least one of said POS systems (3, 7) has at least one POS terminal device (51) with a customer display device (54, 56) and a printer (53) for printing receipts (70), and advertisements are printed on the receipts (70) and indicated on the display device (54, 56).

14. A network system of any one of the preceding claims, wherein said fourth means (22) is adapted to distribute said specific data via a central computer (2, 8) that integrally controls the POS systems (3, 7).

15. A network system of any one of the preceding claims, wherein said POS systems (3, 7) or the central computer is connected to the server system (1) via the Internet (10).

16. A method of processing advertising information in a network system including a server system (1) to which a client PC (5) can connect via the Internet (10), and a POS system (3, 7) having a POS terminal device (51) with a display device (54, 56) and a printing device (53), said method comprising the steps:
(a) sending an application page (13) containing an advertising placement application form in response to a request from the client PC (5);
(b) receiving and storing input information containing advertising placement information input according to the application form at the client PC (5);
(c) calculating an advertising fee based on the input information;
(d) sending to the client PC (5) a payment specification form containing the calculated fee;
(e) confirming fee payment;
(f) registering, in the POS system (3, 7), advertising placement information for which payment has been confirmed; and
(g) printing an advertisement in accordance with said advertising placement information by means of the printing device (53).

17. The method of claim 16, wherein step (e) includes confirming credit card validity.

18. The method of claim 16 or 17, wherein step (f) comprises sending specific data of the input information to the POS system.

19. The method of any one of claims 16 to 18 applied to a network system having a plurality of POS systems (3, 7), wherein the input information received in step (b) contains POS system specifying information, step (f) comprises identifying one or more POS systems (3, 7) from said specifying information, and sending said specific data to the one or more identified POS systems (3, 7).

20. The method of any one of claims 16 to 19, wherein step (f) comprises distributing said specific data by way of a central computer connected to a plurality of POS systems (3, 7).

21. The method of any one of claims 16 to 20, wherein step (f) comprises sending said specific data to said POS system or POS systems (3, 7) by way of the Internet (10).

22. A computer-readable data storage medium carrying computer program means for implementing the method as defined in any of claims 16 to 21.
